# EUROPEAN PATENT APPLICATION

(11) **EP 4 776 276 A1**
(43) Date of publication of application: **15.07.2026**
(21) Application number: 24877605.6
(22) Date of filing: 10.10.2024
(51) Int. Cl.: G10L 15/26, G10L 15/22, G06F 40/279, G06F 40/30, G10L 15/04, G06F 40/247

(54) **ELECTRONIC DEVICE AND METHOD FOR PROCESSING USER SPEECH**

(30) Priority: 13.10.2023 KR 20230136919; 16.11.2023 KR 20230159216
(71) Applicant: Samsung Electronics Co., Ltd., Suwon-si, Gyeonggi-do 16677 (KR)
(72) Inventor: PARK, Sangmin, Suwon-si Gyeonggi-do 16677 (KR); KIM, Kyungtae, Suwon-si Gyeonggi-do 16677 (KR); SONG, Gajin, Suwon-si Gyeonggi-do 16677 (KR)
(74) Representative: Gulde & Partner
(86) International application number: PCT/KR2024/096253
(87) International publication number: WO 2025/080070

(57) **Abstract**

A method according to an embodiment may comprise an operation of converting first speech of a user into text. The method may comprise an operation of partitioning the text into a plurality of text segments including a first text segment and a second text segment. The method may comprise an operation of classifying, into a first type, the first text segment mapped to intention information used to perform a task. The method may comprise an operation of classifying, into a second type, the second text segment which is not mapped to intention information used to perform a task. The method may comprise an operation of performing a first task including a device control operation for a target device on the basis of first intention information corresponding to the first text segment. The method may comprise an operation of generating pairing information by pairing the first intention information and the second text segment. The pairing information may be used to perform the first task when text corresponding to the second text segment is identified in second speech of the user.

## Description

### TECHNICAL FIELD

Embodiments of the present disclosure relate to an electronic device and method for processing a user speech.

### BACKGROUND ART

Electronic devices including a voice assistant function that provides a service based on a user utterance have been widely distributed. The electronic devices may recognize a user utterance using an artificial intelligence server and may determine a meaning and an intent of the user utterance. The artificial intelligence server may interpret the user utterance to infer an intent of the user and may perform a task according to the inferred intent. The artificial intelligence server may perform a task according to the intent of the user expressed through natural language interactions between the user and the artificial intelligence server.

An electronic device including a voice assistant function may perform, in a temporal sequence, an operation of classifying a domain for processing a user utterance and an operation of performing a task corresponding to the user utterance in the classified domain (e.g., a capsule) (e.g., an application).

The above information may be presented as a related art to help with the understanding of the disclosure. No arguments or decisions are made as to whether any of the above is applicable as a prior art related to the disclosure.

### DISCLOSURE OF THE INVENTION

### TECHNICAL SOLUTIONS

An embodiment of the disclosure may provide a method including converting a first utterance of a user into text. The method may include segmenting the text into a plurality of text segments including a first text segment and a second text segment. The method may include classifying, as a first type, the first text segment that is mapped to intent information used to perform a task. The method may include classifying, as a second type, the second text segment that is not mapped to intent information used to perform a task. The method may include performing a first task including a device control operation on a target device based on first intent information corresponding to the first text segment. The method may include generating pairing information by pairing the first intent information with the second text segment. The pairing information may be used to perform the first task when text corresponding to the second text segment is identified in a second utterance of the user.

Another embodiment of the disclosure may provide an electronic device including a processor. The electronic device may include memory storing instructions. The instructions, when executed individually or collectively by the processor, may cause the electronic device to convert a first utterance of a user into text. The instructions, when executed individually or collectively by the processor, may cause the electronic device to segment the text into a plurality of text segments including a first text segment and a second text segment. The instructions, when executed individually or collectively by the processor, may cause the electronic device to classify, as a first type, the first text segment that is mapped to intent information used to perform a task. The instructions, when executed individually or collectively by the processor, may cause the electronic device to classify, as a second type, the second text segment that is not mapped to intent information used to perform a task. The instructions, when executed individually or collectively by the processor, may cause the electronic device to perform a first task including a device control operation on a target device based on first intent information corresponding to the first text segment. The instructions, when executed individually or collectively by the processor, may cause the electronic device to generate pairing information by pairing the first intent information with the second text segment. The pairing information may be used to perform the first task when text corresponding to the second text segment is identified in a second utterance of the user.

Another embodiment of the disclosure may provide a method including converting an utterance of a user into text. The method may include segmenting the text into text segments including at least one of a first text segment and a second text segment. The method may include classifying, as a first type, the first text segment that is mapped to intent information used to perform a task. The method may include classifying, as a second type, the second text segment that is not mapped to intent information used to perform a task. The method may include identifying an utterance chain corresponding to the second text segment. The method may include performing a first task including a device control operation on a target device based on first intent information included in the utterance chain. The utterance chain may be a pairing of the first intent information identified in an utterance prior to the utterance and a second-type text segment obtained in the utterance prior to the utterance.

Another embodiment of the disclosure may provide an electronic device including a processor. The electronic device may include memory storing instructions. The instructions, when executed individually or collectively by the processor, may cause the electronic device to convert an utterance of a user into text. The instructions, when executed individually or collectively by the processor, may cause the electronic device to segment the text into text segments including at least one of a first text segment and a second text segment. The instructions, when executed individually or collectively by the processor, may cause the electronic device to classify, as a first type, the first text segment that is mapped to intent information used to perform a task. The instructions, when executed individually or collectively by the processor, may cause the electronic device to classify, as a second type, the second text segment that is not mapped to intent information used to perform a task. The instructions, when executed individually or collectively by the processor, may cause the electronic device to identify an utterance chain corresponding to the second text segment. The instructions, when executed individually or collectively by the processor, may cause the electronic device to perform a first task including a device control operation on a target device based on first intent information included in the utterance chain. The utterance chain may be a pairing of the first intent information identified in an utterance prior to the utterance and a second-type text segment obtained in the utterance prior to the utterance.

### BRIEF DESCRIPTION OF DRAWINGS

FIG. 1 is a block diagram illustrating an electronic device in a network environment according to an embodiment.
FIG. 2 is a block diagram illustrating an integrated intelligence system according to an embodiment.
FIG. 3 is a diagram illustrating a form in which relationship information between concepts and actions is stored in a database, according to an embodiment.
FIG. 4 is a diagram illustrating a screen of an electronic device processing a voice input received through an intelligent app, according to an embodiment.
FIG. 5 is a diagram illustrating an operation of an electronic device processing a user utterance, according to an embodiment.
FIG. 6 is a schematic block diagram of an electronic device according to an embodiment.
FIGS. 7A to 10C are diagrams illustrating an operation of an electronic device processing a user utterance, according to an embodiment.
FIG. 11 is a flowchart illustrating an operation method of an electronic device according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto is omitted.

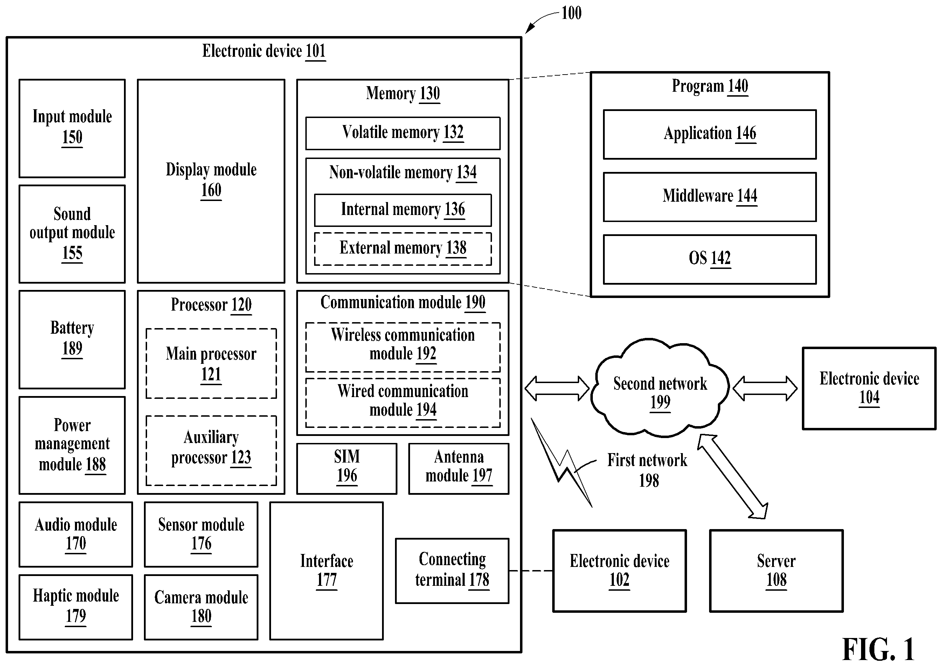

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of data processing or computation, the processor 120 may store a command or data received from another component (e.g., the sensor module 176 or the communication module 190) in volatile memory 132, process the command or the data stored in the volatile memory 132, and store resulting data in non-volatile memory 134.

According to an embodiment, the processor 120 may be implemented as circuitry (e.g., processing circuitry), such as a system-on-chip (SoC) or an integrated circuit (IC). The processor 120 may include one or more processors. For example, the processor 120 may include a combination of one or more processors, such as a central processing unit (CPU), a graphics processing unit (GPU), a microprocessor unit (MPU), an application processor (AP), and a communication processor (CP).

According to an embodiment, the processor 120 may include a main processor 121 (e.g., a CPU or an AP), or an auxiliary processor 123 (e.g., a GPU, a neural processing unit (NPU), an image signal processor (ISP), a sensor hub processor, or a CP) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto.

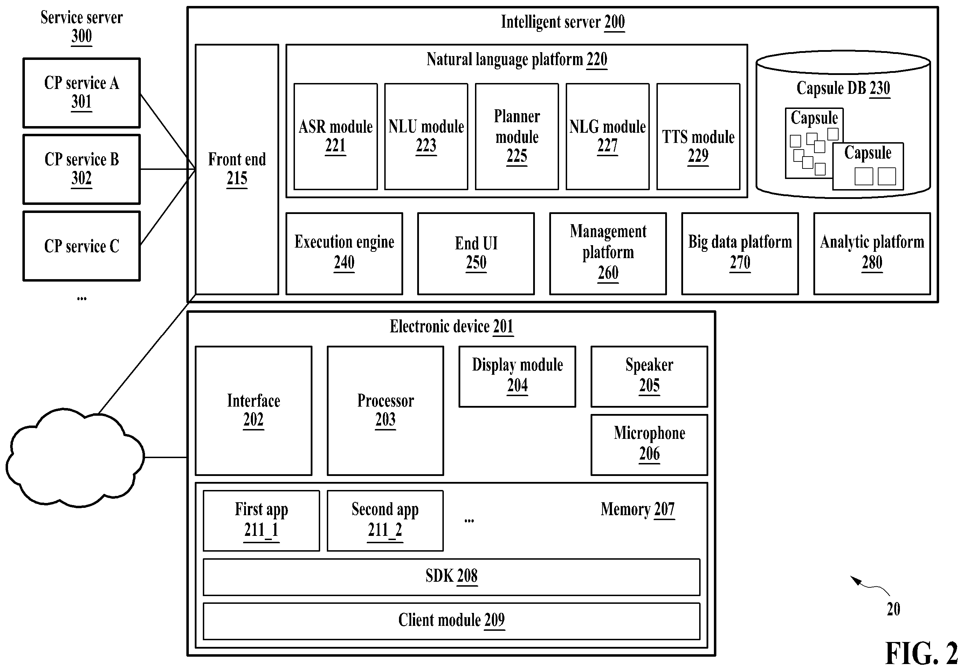

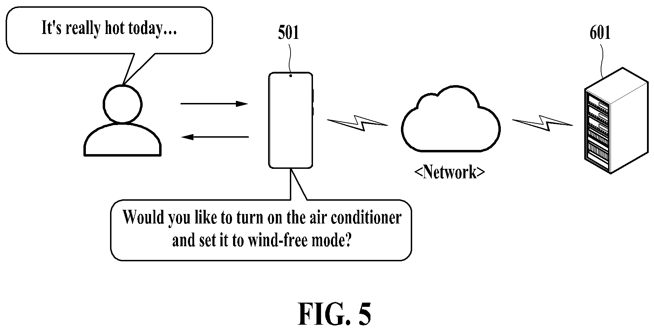

According to an embodiment, the memory 130 may include one or more memories. The instructions stored in the memory 130 may be stored in a single memory. The instructions stored in the memory 130 may be distributed and stored in a plurality of memories. The instructions stored in the memory 130, when executed individually or collectively by the processor 120, may cause the electronic device 101 (e.g., the electronic device 201 of FIG. 2 or the electronic device 501 of FIG. 5) to perform and/or control a user utterance processing method described with reference to FIGS. 5 to 11. The instructions stored in the memory 130, when executed individually or collectively by a plurality of processors, may cause the electronic device 101 (e.g., the electronic device 201 of FIG. 2 or the electronic device 501 of FIG. 5) to perform and/or control the user utterance processing method described with reference to FIGS. 5 to 11. According to an embodiment, the memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via an external electronic device (e.g., an electronic device 102) (e.g., a speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

Referring to FIG. 2, an integrated intelligence system 20 according to an embodiment may include an electronic device 201 (e.g., the electronic device 101 of FIG. 1), an intelligent server 200 (e.g., the server 108 of FIG. 1), and a service server 300 (e.g., the server 108 of FIG. 1).

The electronic device 201 may be a terminal device (or an electronic device) connectable to the Internet, and may be, for example, a mobile phone, a smartphone, a personal digital assistant (PDA), a notebook computer, a TV, a white home appliance, a wearable device, a head-mounted display (HMD), or a smart speaker.

According to the shown embodiment, the electronic device 201 may include a communication interface 202 (e.g., the interface 177 of FIG. 1), a microphone 206 (e.g., the input module 150 of FIG. 1), a speaker 205 (e.g., the sound output module 155 of FIG. 1), a display module 204 (e.g., the display module 160 of FIG. 1), a memory 207 (e.g., the memory 130 of FIG. 1), or a processor 203 (e.g., the processor 120 of FIG. 1). The components listed above may be operationally or electrically connected to one another.

The communication interface 202 may be connected to an external device and configured to transmit and receive data to and from the external device. The microphone 206 may receive a sound (e.g., a user utterance) and convert the sound into an electrical signal. The speaker 205 may output the electrical signal as a sound (e.g., speech).

The display module 204 may be configured to display an image or video. The display module 204 may also display a graphical user interface (GUI) of an app (or an application program) being executed. The display module 204 of an embodiment may receive a touch input through a touch sensor. For example, the display module 204 may receive a text input through the touch sensor in an on-screen keyboard area displayed on the display module 204.

The memory 207 of an embodiment may store a client module 209, a software development kit (SDK) 208, and a plurality of apps 211. The client module 209 and the SDK 208 may configure a framework (or a solution program) for performing general-purpose functions. In addition, the client module 209 or the SDK 208 may configure a framework for processing a user input (e.g., a speech input, a text input, or a touch input).

The plurality of apps 211 stored in the memory 207 of an embodiment may be programs for performing designated functions. The plurality of apps 211 may include a first app 211_1, a second app 211_2, and the like. According to an embodiment, each of the plurality of apps 211 may include a plurality of actions for a designated function. For example, the apps may include an alarm app, a messaging app, and/or a scheduling app. The plurality of apps 211 may be executed by the processor 203 to sequentially execute at least a portion of the plurality of actions.

The processor 203 may control the overall operation of the electronic device 201. For example, the processor 203 may be electrically connected to the communication interface 202, the microphone 206, the speaker 205, and the display module 204 to perform a designated action.

According to an embodiment, the processor 203 may be implemented as circuitry (e.g., processing circuitry), such as an SoC or an IC. The processor 203 may include one or more processors. For example, the processor 203 may include a combination of one or more processors, such as a CPU, a GPU, an MPU, an AP, and a CP.

The processor 203 of an embodiment may also perform the designated function by executing the program stored in the memory 207. For example, the processor 203 may execute at least one of the client module 209 or the SDK 208 to perform the following operation for processing a user input. The processor 203 may control the actions of the plurality of apps 211 through, for example, the SDK 208. The following operation, which is the operation of the client module 209 or the SDK 208, may be performed by the processor 203.

According to an embodiment, the memory 207 may include one or more memories. The instructions stored in the memory 207 may be stored in a single memory. The instructions stored in the memory 207 may be distributed and stored in a plurality of memories. The instructions stored in the memory 207, when executed individually or collectively by the processor 203, may cause the electronic device 201 (e.g., the electronic device 101 of FIG. 1 or the electronic device 501 of FIG. 5) to perform and/or control a user utterance processing method described with reference to FIGS. 5 to 11. The instructions stored in the memory 207, when executed individually or collectively by a plurality of processors, may cause the electronic device 201 (e.g., the electronic device 101 of FIG. 1 or the electronic device 501 of FIG. 5) to perform and/or control the user utterance processing method described with reference to FIGS. 5 to 11.

The client module 209 of an embodiment may receive a user input. For example, the client module 209 may receive a speech signal corresponding to a user utterance sensed through the microphone 206. Alternatively, the client module 209 may receive a touch input sensed through the display module 204. Alternatively, the client module 209 may receive a text input sensed through a keyboard or an on-screen keyboard. In addition, the client module 209 may receive various types of user inputs sensed through an input module included in the electronic device 201 or an input module connected to the electronic device 201. The client module 209 may transmit the received user input to the intelligent server 200. The client module 209 may transmit state information of the electronic device 201 together with the received user input to the intelligent server 200. The state information may be, for example, execution state information of an app.

The client module 209 of an embodiment may receive a result corresponding to the received user input. For example, when the intelligent server 200 determines a result corresponding to the received user input, the client module 209 may receive the result corresponding to the received user input. The client module 209 may display the received result on the display module 204. In addition, the client module 209 may output the received result in an audio form through the speaker 205.

The client module 209 of an embodiment may receive a plan corresponding to the received user input. The client module 209 may display results of executing a plurality of actions of an app according to the plan on the display module 204. For example, the client module 209 may sequentially display the results of executing the plurality of actions on the display module 204 and output the results in an audio form through the speaker 205. In another example, the electronic device 201 may display only a portion of the results of executing the plurality of actions (e.g., a result of the last action) on the display module 204 and output the portion of the results in an audio form through the speaker 205.

According to an embodiment, the client module 209 may receive a request for obtaining information necessary for calculating a result corresponding to the user input from the intelligent server 200. According to an embodiment, the client module 209 may transmit the necessary information to the intelligent server 200 in response to the request.

The client module 209 of an embodiment may transmit information regarding the results of executing the plurality of actions according to the plan to the intelligent server 200. The intelligent server 200 may confirm that the received user input is correctly processed using the information regarding the results.

The client module 209 may include a speech recognition module. According to an embodiment, the client module 209 may recognize a speech input for a limited function through the speech recognition module. For example, the client module 209 may execute an intelligent app for processing a speech input to perform an organic operation through a designated input (e.g., Wake up!).

The intelligent server 200 may receive information regarding a user speech input from the electronic device 201 through a communication network. According to an embodiment, the intelligent server 200 may convert data regarding the received speech input into text (e.g., text data). According to an embodiment, the intelligent server 200 may generate a plan for a task corresponding to the user speech input based on the text.

According to an embodiment, the plan may be generated by an artificial intelligence system. The artificial intelligence system may be a rule-based system or a neural network-based system (e.g., a feedforward neural network (FNN) or an RNN). Alternatively, the artificial intelligence system may be a combination thereof or other artificial intelligence systems. According to an embodiment, the plan may be selected from a set of pre-defined plans or may be generated in real time in response to a user request. For example, the artificial intelligence system may select at least one plan from the pre-defined plans.

The intelligent server 200 may transmit a result according to the generated plan to the electronic device 201 or transmit the generated plan to the electronic device 201. According to an embodiment, the electronic device 201 may display the result according to the plan on the display module 204. According to an embodiment, the electronic device 201 may display a result of executing an action according to the plan on the display module 204.

The intelligent server 200 of an embodiment may include a front end 215, a natural language platform 220, a capsule database (DB) 230, an execution engine 240, an end UI 250, a management platform 260, a big data platform 270, or an analytic platform 280.

The front end 215 may receive the received user input from the electronic device 201. The front end 215 may transmit a response corresponding to the user input.

According to an embodiment, the natural language platform 220 may include an automatic speech recognition (ASR) module 221, a natural language understanding (NLU) module 223, a planner module 225, a natural language generator (NLG) module 227, or a text-to-speech (TTS) module 229.

The ASR module 221 may convert data regarding the voice input received from the electronic device 201 into text (e.g., text data). The NLU module 223 may discern an intent of a user using the text of the speech input. For example, the NLU module 223 may discern an intent of the user by performing syntactic analysis or semantic analysis on a user input in the form of text data. The NLU module 223 according to an embodiment may discern a meaning of a word extracted from the user input using a linguistic feature (e.g., a grammatical element) of a morpheme or a phrase and may determine the intent of the user by matching the discerned meaning of the word to an intent. In other words, the NLU module 223 may obtain intent information corresponding to a user utterance. The intent information may indicate an intent of the user determined through analysis of the text. The intent information may include information indicating an action or function that the user intends to execute using a device. The intent information may also be referred to as goal information. A slot may be detailed information regarding the intent information. The slot may be a parameter necessary for an action according to the user's intent. The slot may be variable information necessary for an action.

The planner module 225 may generate a plan using a parameter (e.g., a slot) and the intent determined by the NLU module 223. According to an embodiment, the planner module 225 may determine a plurality of domains necessary for a task based on the determined intent. The planner module 225 may determine a plurality of actions included in each of the plurality of domains determined based on the intent. According to an embodiment, the planner module 225 may determine a parameter necessary for the determined plurality of actions, or a result value output by the execution of the plurality of actions. The parameter, and the result value may be defined as a concept of a designated form (or class). Accordingly, the plan may include a plurality of actions and a plurality of concepts determined by the intent of the user. The planner module 225 may determine relationships between the plurality of actions and the plurality of concepts stepwise (or hierarchically). For example, the planner module 225 may determine an execution order of the plurality of actions determined based on the intent of the user, based on the plurality of concepts. In other words, the planner module 225 may determine the execution order of the plurality of actions based on the parameter necessary for the execution of the plurality of actions and results output by the execution of the plurality of actions. Accordingly, the planner module 225 may generate a plan including connection information (e.g., ontology) regarding connections between the plurality of actions and the plurality of concepts. The planner module 225 may generate the plan using information stored in the capsule DB 230 that stores a set of relationships between concepts and actions.

The NLG module 227 may convert designated information into a text form. The information converted to the text form may be in the form of a natural language utterance. The TTS module 229 may convert information in a text form into information in a speech form.

According to an embodiment, some or all the functions of the natural language platform 220 may be implemented in the electronic device 201 as well.

The capsule DB 230 may store information regarding the relationships between the plurality of concepts and actions corresponding to the plurality of domains. A capsule according to an embodiment may include a plurality of action objects (or action information) and concept objects (or concept information) included in the plan. According to an embodiment, the capsule DB 230 may store a plurality of capsules in the form of a concept action network (CAN). According to an embodiment, the plurality of capsules may be stored in a function registry included in the capsule DB 230.

The capsule DB 230 may include a strategy registry that stores strategy information necessary for determining a plan corresponding to a speech input. The strategy information may include reference information for determining one plan when there is a plurality of plans corresponding to the user input. According to an embodiment, the capsule DB 230 may include a follow-up registry that stores information regarding follow-up actions for suggesting a follow-up action to the user in a designated situation. The follow-up action may include, for example, a follow-up utterance. According to an embodiment, the capsule DB 230 may include a layout registry that stores layout information that is information output through the electronic device 201. According to an embodiment, the capsule DB 230 may include a vocabulary registry that stores vocabulary information included in capsule information. According to an embodiment, the capsule DB 230 may include a dialog registry that stores information regarding a dialog (or an interaction) with the user. The capsule DB 230 may update the stored objects through a developer tool. The developer tool may include, for example, a function editor for updating an action object or a concept object. The developer tool may include a vocabulary editor for updating a vocabulary. The developer tool may include a strategy editor for generating and registering a strategy for determining a plan. The developer tool may include a dialog editor for generating a dialog with a user. The developer tool may include a follow-up editor capable of activating a follow-up goal and editing a follow-up utterance that provides a hint. The follow-up goal may be determined based on a currently set goal, a preference of a user, or an environmental condition. In an embodiment, the capsule DB 230 may be implemented in the electronic device 201 as well.

The execution engine 240 may calculate a result using the generated plan. The end user interface 250 may transmit the calculated result to the electronic device 201. Accordingly, the electronic device 201 may receive the result and provide the received result to the user. The management platform 260 may manage information used by the intelligent server 200. The big data platform 270 may collect data of the user. The analytic platform 280 may manage a quality of service (QoS) of the intelligent server 200. For example, the analytic platform 280 may manage the components and processing rate (or efficiency) of the intelligent server 200.

The service server 300 may provide a designated service (e.g., food order or hotel reservation) to the electronic device 201. According to an embodiment, the service server 300 may be a server operated by a library administrator. Services, such as CP service A 301 and CP service B 302, of the service server 300 may interact with a front end 215 of the intelligent server 200. The service server 300 may provide information to be used for generating a plan corresponding to the received user input to the intelligent server 200. The provided information may be stored in the capsule DB 230. In addition, the service server 300 may provide result information according to the plan to the intelligent server 200.

In the integrated intelligence system 20 described above, the electronic device 201 may provide various intelligent services to the user in response to a user input. The user input may include, for example, an input through a physical button, a touch input, or a speech input.

In an embodiment, the electronic device 201 may provide a speech recognition service through an intelligent app (or a speech recognition app) stored therein. In this case, for example, the electronic device 201 may recognize a user utterance or a voice input received through the microphone and provide a service corresponding to the recognized voice input to the user.

In an embodiment, the electronic device 201 may perform a designated action alone or together with the intelligent server and/or a service server, based on the received speech input. For example, the electronic device 201 may execute an app corresponding to the received speech input and perform a designated action through the executed app.

In an embodiment, when the electronic device 201 provides a service together with the intelligent server 200 and/or the service server 300, the electronic device 201 may detect a user utterance using the microphone 206 and generate a signal (or voice data) corresponding to the detected user utterance. The electronic device 201 may transmit the voice data to the intelligent server 200 using the communication interface 202.

The intelligent server 200 may generate, as a response to the speech input received from the electronic device 201, a plan for a task corresponding to the speech input or a result of performing an action according to the plan. The plan may include, for example, a plurality of actions for a task corresponding to a speech input from a user, and a plurality of concepts associated with the plurality of actions. The concepts may be defined as parameters that are input for execution of the plurality of actions or result values that are output by execution of the plurality of actions. The plan may include connection information regarding connections between the plurality of actions and the plurality of concepts.

The electronic device 201 may receive the response using the communication interface 202. The electronic device 201 may output a speech signal generated inside the electronic device 201 to the outside using the speaker 205 or may output an image generated inside the electronic device 201 to the outside using the display module 204.

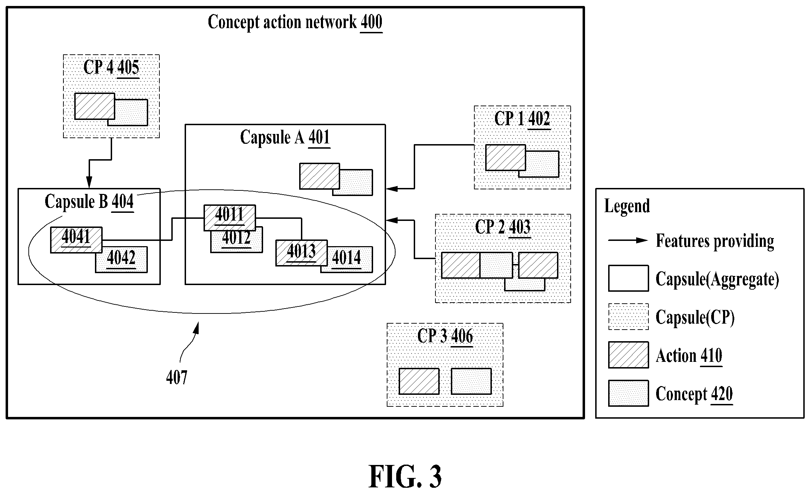

FIG. 3 is a diagram illustrating a form in which relationship information between concepts and actions is stored in a DB, according to an embodiment.

A capsule DB (e.g., the capsule DB 230 of FIG. 2) of an intelligent server (e.g., the intelligent server 200 of FIG. 2) may store capsules in the form of a CAN 400. The capsule DB may store an action for processing a task corresponding to a speech input from a user and a parameter necessary for the action in the form of a CAN.

The capsule DB may store a plurality of capsules (a capsule A 401 and a capsule B 404) respectively corresponding to a plurality of domains. According to an embodiment, one capsule (e.g., the capsule A 401) may correspond to one domain (e.g., a position (geo)). In addition, the one capsule may correspond to at least one service provider (e.g., CP 1 402 or CP 2 403) for a function for a domain associated with the capsule. According to an embodiment, one capsule may include at least one action 410 and at least one concept 420 to perform a designated function. The CAN 400 may store other information such as CP 3 406, and the capsule B 404 may correspond to another service provider (e.g., CP 4 405).

A natural language platform (e.g., the natural language platform 220 of FIG. 2) may generate a plan for a task corresponding to the received speech input using the capsules stored in the capsule DB. For example, a planner module (e.g., the planner module 225 of FIG. 2) of the natural language platform may generate a plan using the capsules stored in the capsule DB. For example, a plan 407 may be generated using actions 4011 and 4013 and concepts 4012 and 4014 of the capsule A 401 and an action 4041 and a concept 4042 of the capsule B 404.

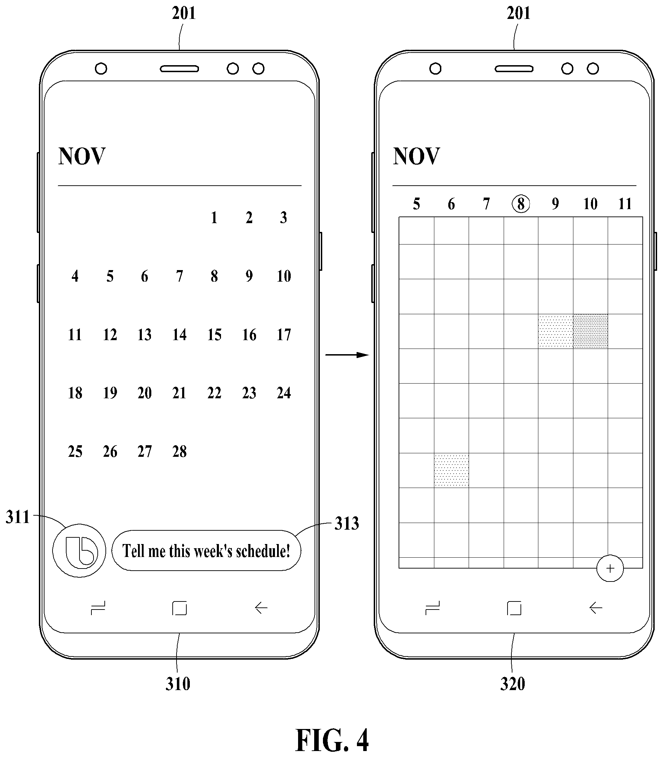

FIG. 4 is a diagram illustrating a screen of an electronic device processing a voice input received through an intelligent app, according to an embodiment.

The electronic device 201 may execute an intelligent app to process a user input through an intelligent server (e.g., the intelligent server 200 of FIG. 2).

According to an embodiment, screen 310, when a designated voice input (e.g., Wake up!) is recognized or an input through a hardware key (e.g., a dedicated hardware key) is received, the electronic device 201 may execute an intelligent app for processing the voice input. The electronic device 201 may execute the intelligent app, for example, in a state in which a scheduling app is executed. According to an embodiment, the electronic device 201 may display an object (e.g., an icon) 311 corresponding to the intelligent app on the display module 204 (e.g., the display module 160 of FIG. 1 and the display module 204 of FIG. 2). According to an embodiment, the electronic device 201 may receive a speech input by a user utterance. For example, the electronic device 201 may receive a speech input of "Tell me this week's schedule!". According to an embodiment, the electronic device 201 may display a user interface (UI) 313 (e.g., an input window) of the intelligent app in which text (e.g., text data) of the received voice input is displayed on the display module 204.

According to an embodiment, on screen 320, the electronic device 201 may display a result corresponding to the received speech input on the display module 204. For example, the electronic device 201 may receive a plan corresponding to the received user input, and display "This week's schedule" on the display module 204 according to the plan.

FIG. 5 is a diagram illustrating an operation of an electronic device processing a user utterance, according to an embodiment.

Referring to FIG. 5, an electronic device 501 may include at least some components of the electronic device 101 described with reference to FIG. 1 and the electronic device 201 described with reference to FIG. 2. An intelligent server 601 may include at least some components of the intelligent server 200 described with reference to FIG. 2. With respect to the electronic device 501 and the intelligent server 601, repeated descriptions provided with reference to FIGS. 1 to 4 are omitted.

According to an embodiment, the electronic device 501 (e.g., the electronic device 101 of FIG. 1 or the electronic device 201 of FIG. 2) may be connected to the intelligent server 601 (e.g., the intelligent server 200 of FIG. 2) via a LAN, a WAN, a value-added network (VAN), a mobile radio communication network, a satellite communication network, or any combination thereof. The electronic device 501 and the intelligent server 601 may communicate with each other through a wired communication method or a wireless communication method (e.g., a wireless LAN (WiFi), Bluetooth, Bluetooth low energy, ZigBee, WiFi direct (WFD), ultra-wideband (UWB), infrared data association (IrDA), and near field communication (NFC)). The electronic device 501 may perform communication with a peripheral device (e.g., the electronic device 102 or the electronic device 104 of FIG. 1) around the electronic device 501.

According to an embodiment, the electronic device 501 may be implemented as at least one of smartphones, tablet personal computers (PCs), mobile phones, speakers (e.g., artificial intelligence speakers), video phones, e-book readers, desktop PCs, laptop PCs, netbook computers, workstations, servers, personal digital assistants (PDAs), portable multimedia players (PMPs), MP3 players, mobile medical devices, cameras, or wearable devices.

According to an embodiment, the electronic device 501 may obtain a voice signal corresponding to an utterance of a user and may transmit the voice signal to the intelligent server 601. The intelligent server 601 may obtain text (e.g., text data) corresponding to the utterance of the user based on the voice signal. The text may be obtained by converting a voice part into computer-readable text data by performing ASR on the voice signal. The intelligent server 601 may analyze the utterance of the user using the text. The intelligent server 601 may perform a necessary function using an analysis result (e.g., intent information, a domain, and/or a capsule) or may provide a response (e.g., a question and an answer) to be provided to a user to a device (e.g., the electronic device 501). The intelligent server 601 may be implemented as software. A portion or the entirety of the intelligent server 601 may be implemented in the electronic device 501. In other words, on-device artificial intelligence for processing an utterance without communication with the intelligent server 601 may be installed on the electronic device 501. At least some of components, such as the natural language platform 220 described with reference to FIGS. 2 to 4, may be implemented in the electronic device 501.

According to an embodiment, the electronic device 501 may perform a task (e.g., a unit specified by a manufacturer of the electronic device 501 provided with a voice assistant) (e.g., a device control operation on a target device) corresponding to a user input (e.g., a user utterance).

According to an embodiment, first, an ASR module (e.g., the ASR module 221 of FIG. 2) included in the electronic device 501 may convert a user utterance into text (e.g., text data). The electronic device 501 may determine a domain and/or intent information corresponding to a user utterance, based on the text, through an NLU module (e.g., the NLU module 223 of FIG. 2).

According to an embodiment, the domain may be a category (or a service) associated with an action (or a function) that a user desires to execute using a device. Domains may be classified based on services provided thereby. For example, a music play domain may support a music play service (e.g., a music play service encompassing the Melon app and the Spotify app). For example, a communication domain may support a communication service (e.g., a communication service encompassing a messaging app, a chat app, and an email app). A plurality of user utterances may be respectively processed based on corresponding domains. A task corresponding to a user utterance may be processed in a capsule (e.g., an application). One capsule may correspond to one domain. The one capsule may include at least one action and at least one concept for a predetermined function. A capsule may process a task corresponding to a user utterance based on intent information. Intent information may be determined in a capsule or in an NLU module.

According to an embodiment, intent information may be information indicating an intent of a user determined through an analysis of text (e.g., text data). The intent information may include information indicating an action (or function) that the user intends to execute using a terminal. The intent information may be used to perform a task. The intent information may be predefined by the manufacturer of the electronic device 501 provided with a voice assistant. The intent information may also be referred to as goal information.

According to an embodiment, a slot may be detailed information regarding the intent information. The slot may be a parameter necessary for an action according to the user's intent.

According to an embodiment, the electronic device 501 may perform a task (e.g., a device control operation) corresponding to a voice input of the user based on domain, intent information, and slots. For example, when the text that is converted from a voice input of the user is "What time is it now in San Francisco?", the domain may be a 'date & time domain', the intent information may correspond to 'date/time information provision', the slot may be 'San Francisco', and the capsule (e.g., an application) may provide the user with the time in San Francisco. For example, when the text that is converted from the voice input of the user is "How's the weather here?", the domain may be a 'weather domain', the intent information may correspond to 'weather information provision', the slot may be a 'current position', and the capsule may provide the weather at the current position. For example, when the text that is converted from the voice input of the user is "Set the oven temperature to 300 degrees," the domain may be a 'device control domain', the intent information may correspond to 'oven control', the slot may be '300 degrees', and the capsule may attempt to set the oven temperature to 300 degrees.

A conventional voice assistant may perform an action based on predefined intent information (e.g., an intent). When the predefined intent information matches a user input, the voice assistant may perform an action corresponding to the matched intent information. A voice assistant may perform an accurate action when receiving an appropriate and concise utterance. The voice assistant may not accurately process a sentence or phrase having a form different from a trained utterance (e.g., by treating the sentence or phrase as an exception or by misrecognizing the user input and performing an incorrect action). With the advancement of voice assistant functions, the frequency with which a user inputs a large amount of text at once (e.g., as an utterance) is increasing. Due to relatively limited resource capacity, a conventional voice assistant may have difficulty accurately processing large amounts of input.

In the case of a large language model (LLM)-based dialogue engine, when a detailed utterance is provided, an accurate result may be obtained. The LLM-based dialogue engine using an artificial neural network-based probabilistic model may be trained on a large-scale language corpus and may effectively process various user inputs. Due to relatively large resource capacity, the LLM-based dialogue engine may process large amounts of input. However, as the LLM-based dialogue engine becomes heavier, response time to user input increases.

According to an embodiment, the electronic device 501 may process various user inputs (e.g., utterances). The electronic device 501 may use a user's utterance pattern. The electronic device 501 may respond to an utterance that does not match predefined intent information based on the user's utterance pattern. The electronic device 501 may use user input indicating the user's situation.

According to an embodiment, the electronic device 501 may appropriately handle large amounts of user input (e.g., utterances). The electronic device 501 may segment user input. The electronic device 501 may respond to a multi-intent scenario (e.g., a multi-intent utterance or a multi-goal utterance) by segmenting large amounts of user input.

The electronic device 501 may receive an input (e.g., an utterance) (e.g., "It's really hot today...") from a user. The electronic device 501 may convert the user's utterance (e.g., "It's really hot today...") into text (e.g., text data) (e.g., 'It's really hot today...'). The electronic device 501 may segment the text into text segments based on a possibility of matching with intent information. Since the text (e.g., 'It's really hot today...') does not include any portion that may be matched with the intent information, the text may not be segmented. However, for consistency of terminology, the text (e.g., 'It's really hot today...') may hereinafter also be referred to as a text segment (e.g., 'It's really hot today...'). The electronic device 501 may analyze the text segment (e.g., 'It's really hot today...') and classify the text segment (e.g., 'It's really hot today...') as a second type text segment that is not mapped to the intent information (e.g., intent information used to perform a task). The electronic device 501 may identify an utterance chain (e.g., the text segment 'It's really hot today', the intent information 'air conditioner on', and the intent information 'set the air conditioner temperature to 22 degrees') (e.g., an utterance chain based on the user's utterance pattern) that matches the second-type text segment (e.g., 'It's really hot today...'). The electronic device 501 may perform a task corresponding to the utterance chain (e.g., the text segment 'It's really hot today', the intent information 'air conditioner on', and the intent information 'set the air conditioner temperature to 22 degrees'). The electronic device 501 may provide a response (e.g., "Would you like to turn on the air conditioner and set it to wind-free mode?") to the user to perform a task.

According to an embodiment, the electronic device 501 may not require a trigger predefined by the user (e.g., a trigger "It's hot" corresponding to the intent information 'air conditioner on' and the intent information 'set the air conditioner temperature to 22 degrees'). The electronic device 501 may not require explicit trigger definition.

According to an embodiment, the electronic device 501 may not consider an association between pieces of repeatedly used intent information (e.g., 'air conditioner on' and 'set the air conditioner temperature to 22 degrees'). The electronic device 501 may extract utterances that do not match the intent information from a user's utterance pattern and use the extracted utterances.

According to an embodiment, the electronic device 501 may not require a probabilistic model, such as an LLM. The electronic device 501 may minimize malfunction issues, such as hallucination phenomena. The electronic device 501 may provide a response predictable to the user as an intermediate approach between direct input and full inference.

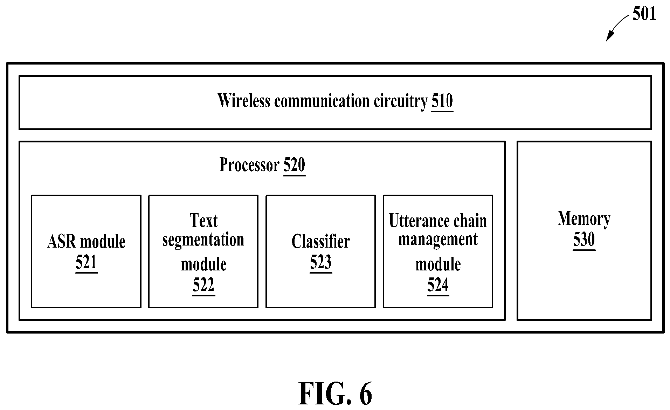

FIG. 6 is a schematic block diagram of an electronic device according to an embodiment.

Referring to FIG. 6, the electronic device 501 may include at least some components of the electronic device 101 described with reference to FIG. 1 and the electronic device 201 described with reference to FIG. 2. As described above, on-device artificial intelligence for processing an utterance without communication with an intelligent server (e.g., the intelligent server 200 of FIG. 2 or the intelligent server 601 of FIG. 5) may be installed on the electronic device 501. At least some functions of the natural language platform 220 described above with reference to FIGS. 2 to 4 may be implemented in the electronic device 501. With respect to the electronic device 501, repeated descriptions provided with reference to FIGS. 1 to 4 are omitted.

According to an embodiment, the electronic device 501 may include wireless communication circuitry 510 (e.g., the wireless communication module 192 of FIG. 1). The electronic device 501 may include a processor 520 (e.g., the processor 120 of FIG. 1 or the processor 203 of FIG. 2). The electronic device 501 may include a memory 530 (e.g., the memory 130 of FIG. 1 or the memory 207 of FIG. 2). The processor 520 (e.g., an AP) may execute one or more instructions by accessing the memory 530. The processor 520 may cause the electronic device 501 to provide a response to a user. The memory 530 may store various types of data used by at least one component (e.g., the processor 520) of the electronic device 501.

According to an embodiment, the processor 520 may be implemented as circuitry (e.g., processing circuitry), such as an SoC or an IC. The processor 520 may include one or more processors. For example, the processor 520 may include a combination of one or more processors, such as a CPU, a GPU, an MPU, an AP, and a CP.

According to an embodiment, the memory 530 may include one or more memories. The instructions stored in the memory 530 may be stored in a single memory. The instructions stored in the memory 530 may be distributed and stored in a plurality of memories. The instructions stored in the memory 530, when executed individually or collectively by the processor 520, may cause the electronic device 501 (e.g., the electronic device 101 of FIG. 1 or the electronic device 201 of FIG. 2) to perform and/or control a user utterance processing method described with reference to FIGS. 5 to 11. The instructions stored in the memory 530, when executed individually or collectively by a plurality of processors, may cause the electronic device 501 (e.g., the electronic device 101 of FIG. 1 or the electronic device 201 of FIG. 2) to perform and/or control the user utterance processing method described with reference to FIGS. 5 to 11.

According to an embodiment, the electronic device 501 may receive an input (e.g., an utterance) from a user. The electronic device 501 may convert the user's utterance into text (e.g., text data) based on an ASR module 521 (e.g., the automatic speech recognition module 221 of FIG. 2).

According to an embodiment, the electronic device 501 may segment the text based on a text segmentation module 522. The electronic device 501 may segment a compound sentence or a complex sentence into at least one of a simple sentence, an independent clause, or a dependent clause. The electronic device 501 may segment the text based on intent information. The intent information has been described in detail with reference to FIG. 5, and thus a repeated description thereof will be omitted. The electronic device 501 may segment the text based on a possibility of matching with the intent information. The electronic device 501 may segment the text to obtain text segments.

According to an embodiment, the electronic device 501 may analyze the text segments using a classifier 523 (e.g., the NLU 223 of FIG. 2). The classifier 523 may identify the user's intent based on each of the text segments. The classifier 523 may perform syntactic analysis, semantic analysis, or statistical classification (e.g., pattern recognition or machine learning) on each of the text segments to identify the user's intent. In other words, the classifier 523 may obtain intent information corresponding to each text segment. The text segments may include a text segment from which intent information is not obtained (e.g., derived). A text segment from which intent information is not derived (or a text segment that does not match intent information) may be classified as a second type. A text segment from which intent information is derived (or a text segment that matches intent information) may be classified as a first type. The classifier 523 may classify the text segments into first-type text segments (e.g., first text segments) that match intent information and second-type text segments (e.g., second text segments) that do not match the intent information. A second-type text segment may include text indicating a situation of the user. A second-type text segment may include text classified as an unprocessable command or as a declarative sentence without intent.

According to an embodiment, the electronic device 501 may manage an utterance chain and/or pairing information using an utterance chain management module 524. The pairing information may be a pairing of first intent information (e.g., first intent information corresponding to a first-type text segment) and a second-type text segment. The utterance chain management module 524 may determine the pairing information as an utterance chain when the number of pairings between the first intent information and the second-type text segment exceeds a threshold. When text corresponding to a second-type text segment (e.g., a second-type text segment included in the utterance chain) is identified from a subsequent utterance of the user, the electronic device 501 may perform a task based on the first intent information included in the utterance chain. Management operations of the utterance chain will be described in detail below.

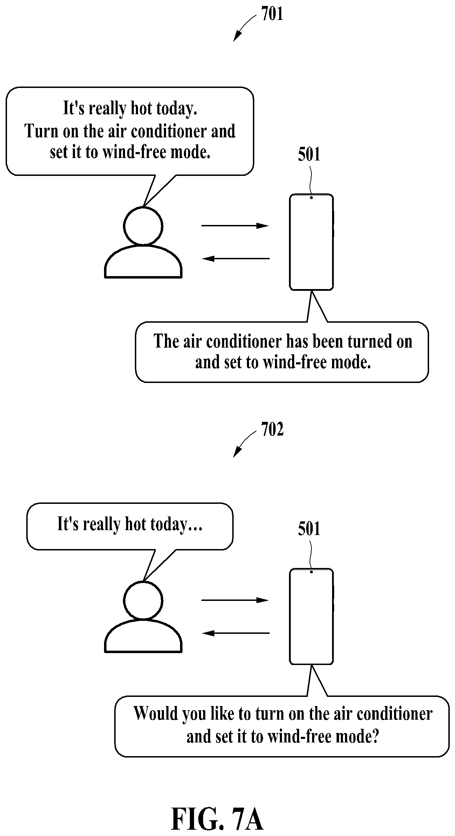

FIGS. 7A to 10C are diagrams illustrating an operation of an electronic device processing a user utterance, according to an embodiment.

Referring to FIG. 7A, according to an embodiment, the electronic device 501 may generate an utterance chain (e.g., scenario 701) and may use the utterance chain (e.g., scenario 702).

According to an embodiment, in scenario 701, the electronic device 501 may receive an input (e.g., an utterance) (e.g., "It's really hot today. Turn on the air conditioner and set it to wind-free mode.") from a user. The electronic device 501 may convert the user's utterance (e.g., "It's really hot today. Turn on the air conditioner and set it to wind-free mode.") into text (e.g., text data) (e.g., 'It's really hot today. Turn on the air conditioner and set it to wind-free mode.'). The electronic device 501 may segment the text based on a possibility of matching with intent information. The text (e.g., 'It's really hot today. Turn on the air conditioner and set it to wind-free mode.') may be segmented into text segments (e.g., 'It's really hot today', 'turn on the air conditioner', and 'set it to wind-free mode'). The electronic device 501 may determine that the text (e.g., 'It's really hot today. Turn on the air conditioner and set it to wind-free mode.') is a compound sentence and may segment the compound sentence into clauses to obtain three text segments (e.g., 'It's really hot today', 'turn on the air conditioner', and 'set it to wind-free mode'). The electronic device 501 may perform intent determination based on each segmented text segment. The electronic device 501 may analyze the text segments (e.g., 'It's really hot today', 'turn on the air conditioner', and 'set it to wind-free mode') to classify the text segments (e.g., 'turn on the air conditioner' and 'set it to wind-free mode') as first type text segments that match intent information and the text segment (e.g., 'It's really hot today') as a second type text segment that does not match the intent information. The electronic device 501 may generate an utterance chain (e.g., the text segment 'It's really hot today', the intent information 'air conditioner on', and the intent information 'set it to wind-free mode') by pairing first intent information (e.g., the intent information 'air conditioner on' and the intent information 'set it to wind-free mode') corresponding to the first-type text segments (e.g., 'turn on the air conditioner' and 'set it to wind-free mode') (e.g., first text segments) with the second-type text segment (e.g., 'It's really hot today') (e.g., a second text segment). The electronic device 501 may perform a task (e.g., a device control operation on the air conditioner that is a target device) corresponding to the first intent information (e.g., the intent information 'air conditioner on' and the intent information 'set it to wind-free mode') (e.g., turning on the air conditioner and setting the air conditioner to wind-free mode). The electronic device 501 may provide a response (e.g., "The air conditioner has been turned on and set to wind-free mode.") to the user after performing the task. When text corresponding to a second-type text segment (e.g., 'It's really hot today') (e.g., a second-type text segment included in an utterance chain) is identified from a subsequent utterance (e.g., a second utterance) of the user, the electronic device 501 may perform a task (e.g., a task corresponding to the first intent information (e.g., the intent information 'air conditioner on' and the intent information 'set it to wind-free mode')) based on the utterance chain (e.g., the text segment 'It's really hot today', the intent information 'air conditioner on', and the intent information 'set it to wind-free mode').

According to an embodiment, in scenario 702, the electronic device 501 may receive an input (e.g., an utterance) (e.g., "It's really hot today...") from the user. The electronic device 501 may convert the user's utterance (e.g., "It's really hot today...") into text (e.g., text data) (e.g., 'It's really hot today...'). The electronic device 501 may segment the text based on a possibility of matching with the intent information. Since the text (e.g., 'It's really hot today...') does not include any portion that may be matched with the intent information, the text may not be segmented. The electronic device 501 may segment text including a compound sentence or a complex sentence. Since the text (e.g., 'It's really hot today...') is a simple sentence, the text may not be segmented. However, for consistency of terminology, the text (e.g., 'It's really hot today...') may hereinafter also be referred to as a text segment (e.g., 'It's really hot today...'). The electronic device 501 may analyze the text segment (e.g., 'It's really hot today...') and classify the text segment (e.g., 'It's really hot today...') as a second type text segment that does not match the intent information (e.g., intent information used to perform a task). The electronic device 501 may identify an utterance chain (e.g., the text segment 'It's really hot today...', the intent information 'air conditioner on', and the intent information 'set it to wind-free mode') that matches the second-type text segment (e.g., 'It's really hot today...'). The electronic device 501 may perform a task (e.g., a device control operation on an air conditioner that is a target device) corresponding to the utterance chain (e.g., the text segment 'It's really hot today', the intent information 'air conditioner on', and the intent information 'set it to wind-free mode') (e.g., turning on the air conditioner and setting the air conditioner to wind-free mode). The electronic device 501 may provide a response (e.g., "Would you like to turn on the air conditioner and set it to wind-free mode?") to the user before performing the task. It should be noted that, for an utterance chain to operate as a trigger for a task, the number of times the utterance chain is obtained (e.g., scenario 701) (e.g., the number of pairings between first intent information and a second-type text segment) may need to exceed a threshold.

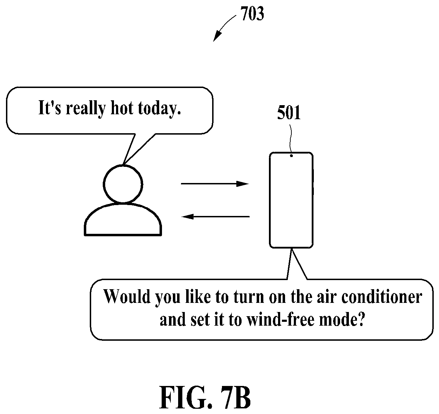

Referring to FIG. 7B, according to an embodiment, in scenario 703, the electronic device 501 may receive an input (e.g., an utterance) (e.g., "It's really hot today.") from a user. The electronic device 501 may convert the user's utterance (e.g., "It's really hot today.") into text (e.g., text data) (e.g., 'It's really hot today.'). The electronic device 501 may segment the text based on a possibility of matching with the intent information. Since the text (e.g., 'It's really hot today.') does not include any portion that may be matched with the intent information, the text may not be segmented. The electronic device 501 may segment text including a compound sentence or a complex sentence. Since the text (e.g., 'It's really hot today.') is a simple sentence, the text may not be segmented. However, for consistency of terminology, the text (e.g., 'It's really hot today.') may hereinafter also be referred to as a text segment (e.g., 'It's really hot today.'). The electronic device 501 may analyze the text segment (e.g., 'It's really hot today.') and classify the text segment (e.g., 'It's really hot today.') as a second type text segment that does not match intent information. The electronic device 501 may identify an utterance chain (e.g., the text segment 'It's really hot today', the intent information 'air conditioner on', and the intent information 'set it to wind-free mode') that matches the second-type text segment (e.g., 'It's really hot today.'). The identification of the utterance chain may be performed based on a determination of similarity between the text segment (e.g., 'It's really hot today') included in the utterance chain and a second-type text segment (e.g., 'It's really hot today.') classified by the electronic device 501. The determination of similarity between text segments may be performed based on a matching score between sentences (e.g., a score based on an edit distance (e.g., a Levenshtein distance) for determining a similarity between strings or a score based on term frequency-inverse document frequency (TF-IDF) for evaluating word importance). Text segments having a matching score between sentences greater than or equal to a threshold may be determined to be similar. The electronic device 501 may perform a task corresponding to the utterance chain (e.g., the text segment 'It's really hot today', the intent information 'air conditioner on', and the intent information 'set it to wind-free mode') (e.g., turning on the air conditioner and setting the air conditioner to wind-free mode). The electronic device 501 may provide a response (e.g., "Would you like to turn on the air conditioner and set it to wind-free mode?") to the user before performing the task.

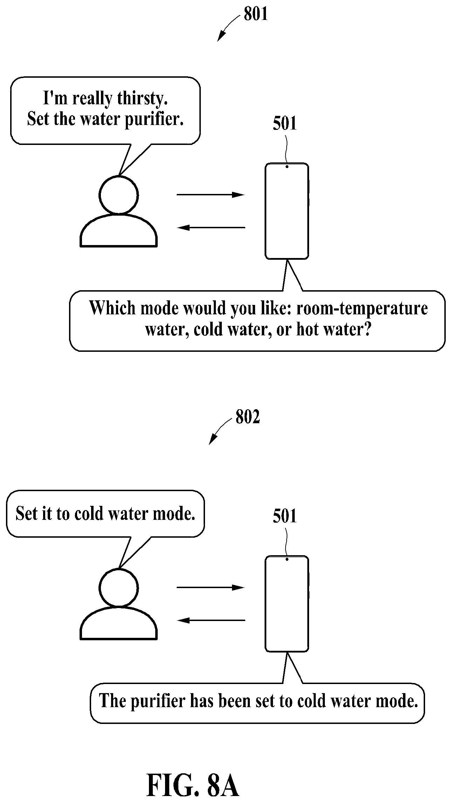

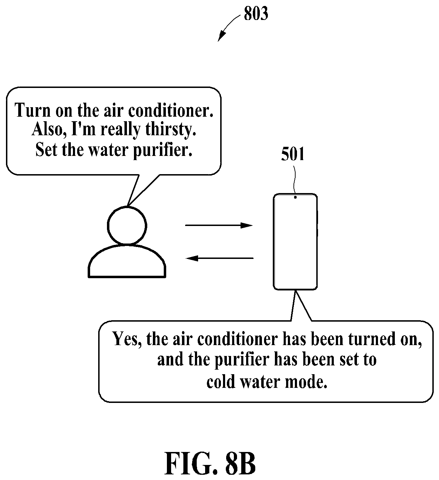

Referring to FIGS. 8A and 8B, according to an embodiment, an utterance chain may be generated based on multi-turn utterances.

According to an embodiment, in scenario 801, the electronic device 501 may receive an input (e.g., an utterance) (e.g., "I'm really thirsty. Set the water purifier.") from the user. The electronic device 501 may convert the user's utterance (e.g., "I'm really thirsty. Set the water purifier.") into text (e.g., text data) (e.g., 'I'm really thirsty. Set the water purifier.'). The electronic device 501 may segment the text based on a possibility of matching with the intent information. The text (e.g., 'I'm really thirsty. Set the water purifier.') may be segmented into text segments (e.g., 'I'm really thirsty' and 'set the water purifier'). The electronic device 501 may analyze the text segments (e.g., 'I'm really thirsty' and 'set the water purifier') to classify the text segment (e.g., 'set the water purifier') as a first type text segment that matches intent information and the text segment (e.g., 'I'm really thirsty') as a second type text segment that does not match the intent information. First intent information (e.g., the intent information 'set the water purifier') corresponding to the first-type text segment (e.g., 'set the water purifier') may require additional parameters (e.g., slots). The electronic device 501 may provide a response (e.g., "Which mode would you like: room-temperature water, cold water, or hot water?") for obtaining additional parameters to the user.

According to an embodiment, in scenario 802, the electronic device 501 may receive an input (e.g., "Set it to cold water mode.") from the user. Based on the input (e.g., "Set it to cold water mode."), the electronic device 501 may determine first intent information (and/or a slot) (e.g., 'set it to cold water mode'). The electronic device 501 may generate an utterance chain (e.g., the text segment 'I'm really thirsty', and the intent information 'set it to cold water mode') by pairing the first intent information (e.g., the intent information 'set it to cold water mode') corresponding to the first-type text segment (e.g., 'set it to cold water mode') with the second-type text segment (e.g., 'I'm really thirsty'). The electronic device 501 may perform a task (e.g., a device control operation of a water purifier that is a target device) corresponding to the first intent information (e.g., the intent information 'set it to cold water mode') (e.g., setting the water purifier to cold water mode). The electronic device 501 may provide a response (e.g., "The water purifier has been set to cold water mode.") to the user after performing the task. Referring to FIG. 8A, in a multi-turn scenario in which a conversation context is maintained, the electronic device 501 may include a second-turn input (e.g., the utterance "Set it to cold water mode.") in an utterance chain.

Referring to FIG. 8B, according to an embodiment, in scenario 803, the electronic device 501 may receive an input (e.g., "Turn on the air conditioner. Also, I'm really thirsty. Set the water purifier.") from the user. Based on the input (e.g., "Turn on the air conditioner. Also, I'm really thirsty. Set the water purifier."), the electronic device 501 may obtain first intent information (e.g., 'air conditioner on' and 'set the water purifier'). As described above with reference to FIG. 8A, the intent information 'set the water purifier') may require additional parameters (e.g., slots). The electronic device 501 may use other first intent information (e.g., 'air conditioner on') to obtain additional parameters of the intent information (e.g., 'set the water purifier'). The other first intent information (e.g., 'air conditioner on') may indicate that the user feels hot. Based on the other first intent information (e.g., 'air conditioner on'), the electronic device 501 may determine first intent information (and/or a slot) (e.g., 'set it to cold water mode'). The electronic device 501 may generate an utterance chain (e.g., the text segment 'I'm really thirsty', the intent information 'set it to cold water mode', and the intent information 'air conditioner on') by pairing the first intent information (e.g., 'air conditioner on' and 'set it to cold water mode') corresponding to first-type text segments (e.g., 'turn on the air conditioner' and 'set the water purifier') with the second-type text segment (e.g., 'I'm really thirsty'). The electronic device 501 may perform a task (e.g., a device control operation on a water purifier and an air conditioner that are target devices) corresponding to the first intent information (e.g., the intent information 'air conditioner on' and the intent information 'set it to cold water mode') (e.g., turning on the air conditioner and setting the water purifier to cold water mode). The electronic device 501 may provide a response (e.g., "Yes, the air conditioner has been turned on, and the water purifier has been set to cold water mode.") to the user after performing the task.

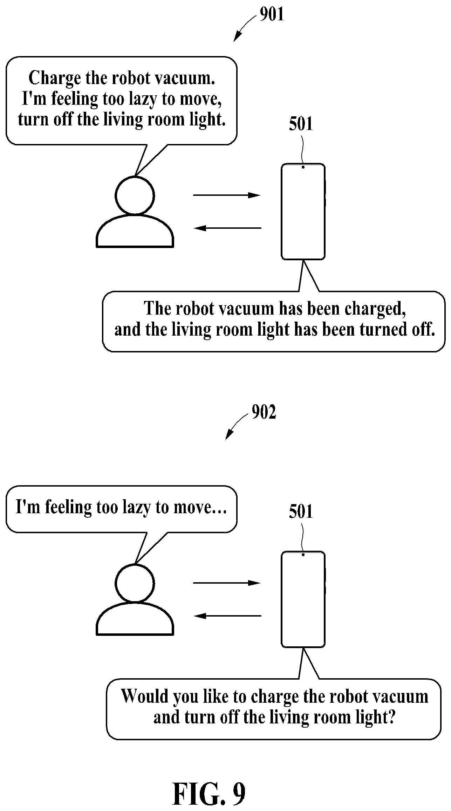

Referring to FIG. 9, according to an embodiment, the electronic device 501 may segment text, and thus may extract and use a second-type text segment even from an inverted sentence.

According to an embodiment, in scenario 901, the electronic device 501 may receive an input (e.g., an utterance) (e.g., "Charge the robot vacuum. I'm feeling too lazy to move. Turn off the living room light.") from the user. The electronic device 501 may convert the user's utterance (e.g., "Charge the robot vacuum. I'm feeling too lazy to move. Turn off the living room light.") into text (e.g., text data) (e.g., 'Charge the robot vacuum. I'm feeling too lazy to move. Turn off the living room light.'). The electronic device 501 may segment the text based on a possibility of matching with the intent information. The text (e.g., 'Charge the robot vacuum. I'm feeling too lazy to move. Turn off the living room light.') may be segmented into text segments (e.g., 'charge the robot vacuum', 'I'm feeling too lazy to move', and 'turn off the living room light'). The electronic device 501 may analyze the text segments (e.g., 'charge the robot vacuum', 'I'm feeling too lazy to move', and 'turn off the living room light') to classify the text segments (e.g., 'charge the robot vacuum' and 'turn off the living room light') as first type text segments that match intent information and the text segment (e.g., 'I'm feeling too lazy to move') as a second type text segment that does not match the intent information. The electronic device 501 may generate an utterance chain (e.g., the text segment 'I'm feeling too lazy to move', the intent information 'start charging the robot vacuum', and the intent information 'turn off the living room light') by pairing first intent information (e.g., the intent information 'start charging the robot vacuum' and the intent information 'turn off the living room light') corresponding to the first-type text segments (e.g., 'charge the robot vacuum' and 'turn off the living room light') with the second-type text segment (e.g., 'I'm feeling too lazy to move'). The electronic device 501 may perform tasks (e.g., device control operations on a robot vacuum and a living room light that are target devices) corresponding to the first intent information (e.g., the intent information 'start charging the robot vacuum' and the intent information 'turn off the living room light') (e.g., starting to charge the robot vacuum and turning off the living room light). The electronic device 501 may provide a response (e.g., "The robot vacuum has been charged, and the living room light has been turned off.") to the user after performing the task.

According to an embodiment, in scenario 902, the electronic device 501 may receive an input (e.g., an utterance) (e.g., "I'm feeling too lazy to move...") from the user. The electronic device 501 may convert the user's utterance (e.g., "I'm feeling too lazy to move...") into text (e.g., text data) (e.g., 'I'm feeling too lazy to move...'). The electronic device 501 may segment the text based on a possibility of matching with the intent information. Since the text (e.g., 'I'm feeling too lazy to move...') does not include any portion that may be matched with the intent information, the text may not be segmented. However, for consistency of terminology, the text (e.g., 'I'm feeling too lazy to move...') may hereinafter also be referred to as a text segment (e.g., 'I'm feeling too lazy to move...'). The electronic device 501 may analyze the text segment (e.g., 'I'm feeling too lazy to move...') and classify the text segment (e.g., 'I'm feeling too lazy to move...') as a second type text segment that does not match intent information. The electronic device 501 may identify the utterance chain (e.g., the text segment 'I'm feeling too lazy to move', the intent information 'start charging the robot vacuum', and the intent information 'living room light off') that matches the second-type text segment (e.g., 'I'm feeling too lazy to move...'). The electronic device 501 may identify the utterance chain based on a determination of similarity between the second-type text segment (e.g., 'I'm feeling too lazy to move...') included in the utterance chain (e.g., the text segment 'I'm feeling too lazy to move', the intent information 'start charging the robot vacuum', and the intent information 'living room light off) and the second-type text segment (e.g., 'I'm feeling too lazy to move...') identified by the electronic device 501. The electronic device 501 may perform a task corresponding to the utterance chain (e.g., the text segment 'I'm feeling too lazy to move', the intent information 'start charging the robot vacuum', and the intent information 'living room light off) (e.g., starting to charge the robot vacuum and turning off the living room light). The electronic device 501 may provide a response (e.g., "Would you like to charge the robot vacuum and turn off the living room light?") to the user before performing the task.

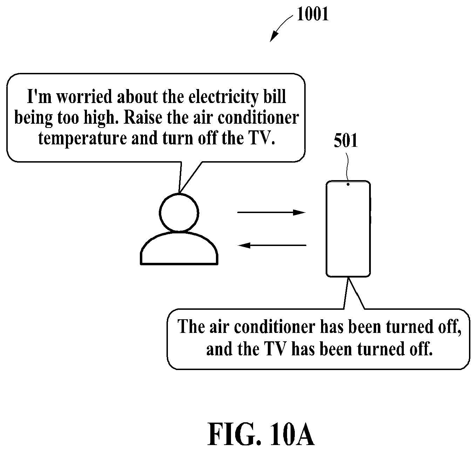

Referring to FIGS. 10A to 10C, according to an embodiment, an utterance chain may be adaptively updated based on a user's subsequent utterance.

Referring to FIG. 10A, according to an embodiment, in scenario 1001, the electronic device 501 may receive an input (e.g., an utterance) (e.g., "I'm worried about the electricity bill being too high. Raise the air conditioner temperature and turn off the TV.") from the user. The electronic device 501 may convert the user's utterance (e.g., "I'm worried about the electricity bill being too high. Raise the air conditioner temperature and turn off the TV.") into text (e.g., text data) (e.g., 'I'm worried about the electricity bill being too high. Raise the air conditioner temperature and turn off the TV.') The electronic device 501 may segment the text based on a possibility of matching with intent information. The text (e.g., 'I'm worried about the electricity bill being too high. Raise the air conditioner temperature and turn off the TV.') may be segmented into text segments (e.g., 'I'm worried about the electricity bill being too high', 'raise the air conditioner temperature', and 'turn off the TV'). The electronic device 501 may analyze the text segments (e.g., 'I'm worried about the electricity bill being too high', 'raise the air conditioner temperature', and 'turn off the TV') to classify the text segments (e.g., 'raise the air conditioner temperature' and 'turn off the TV') as first type text segments that match intent information and the text segment (e.g., 'I'm worried about the electricity bill being too high') as a second type text segment that does not match the intent information. The electronic device 501 may generate an utterance chain (e.g., the text segment 'I'm worried about the electricity bill being too high', the intent information 'raise the air conditioner temperature', and the intent information 'TV off) by pairing first intent information (e.g., the intent information 'raise the air conditioner temperature' and the intent information 'TV off) corresponding to the first-type text segments (e.g., 'raise the air conditioner temperature' and 'turn off the TV') with the second-type text segment (e.g., 'I'm worried about the electricity bill being too high'). The electronic device 501 may perform tasks (e.g., device control operations on an air conditioner and a TV that are target devices) corresponding to the first intent information (e.g., the intent information 'raise the air conditioner temperature' and the intent information 'TV off). The electronic device 501 may provide a response (e.g., "The air conditioner has been turned off, and the TV has been turned off.") to the user after performing the task.

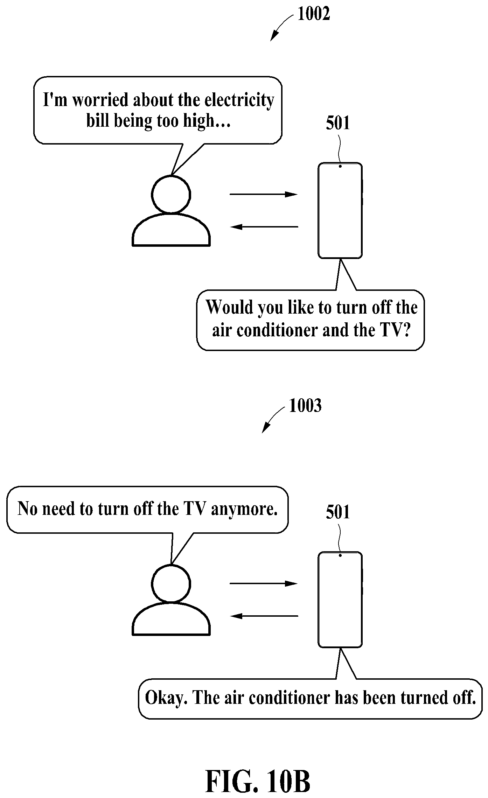

Referring to FIG. 10B, according to an embodiment, in scenario 1002, the electronic device 501 may receive an input (e.g., an utterance) (e.g., "I'm worried about the electricity bill being too high...") from a user. Text (e.g., text data) (e.g., 'I'm worried about the electricity bill being too high...') corresponding to the input (e.g., "I'm worried about the electricity bill being too high...") may match the utterance chain (e.g., the text segment 'I'm worried about the electricity bill being too high', the intent information 'raise the air conditioner temperature' and the intent information 'TV off). The electronic device 501 may provide a response (e.g., "Would you like to turn off the air conditioner and the TV?") to the user before performing tasks corresponding to the utterance chain (e.g., the text segment 'I'm worried about the electricity bill being too high', the intent information 'raise the air conditioner temperature' and the intent information 'TV off).

According to an embodiment, in scenario 1003, the electronic device 501 may receive a subsequent input (e.g., a subsequent utterance) (e.g., "No need to turn off the TV anymore.") from the user. The electronic device 501 may update (e.g., delete the intent information 'TV off from the utterance chain) the utterance chain (e.g., the text segment 'I'm worried about the electricity bill being too high', the intent information 'raise the air conditioner temperature' and the intent information 'TV off). The electronic device 501 may perform a task corresponding to the updated utterance chain (e.g., the text segment 'I'm worried about the electricity bill being too high' and the intent information 'raise the air conditioner temperature'). The electronic device 501 may provide a response (e.g., "Yes, the air conditioner temperature has been raised.") to the user after performing the task.

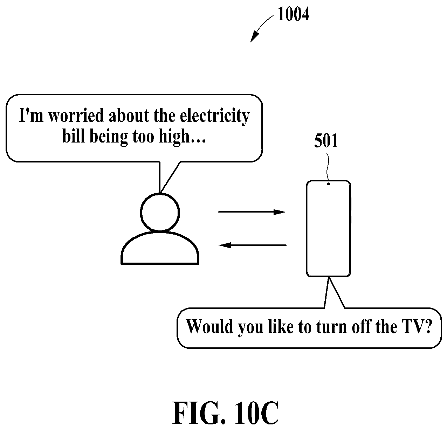

Referring to FIG. 10C, according to an embodiment, in scenario 1004, the electronic device 501 may receive an input (e.g., an utterance) (e.g., "I'm worried about the electricity bill being too high...") from a user. Text (e.g., text data) (e.g., 'I'm worried about the electricity bill being too high...') corresponding to the input (e.g., an utterance) (e.g., "I'm worried about the electricity bill being too high...") may match the updated utterance chain (e.g., the text segment 'I'm worried about the electricity bill being too high' and the intent information 'raise the air conditioner temperature'). The electronic device 501 may provide a response (e.g., "Would you like to raise the air conditioner temperature?") to the user before performing tasks corresponding to the updated utterance chain (e.g., the text segment 'I'm worried about the electricity bill being too high' and the intent information 'raise the air conditioner temperature').

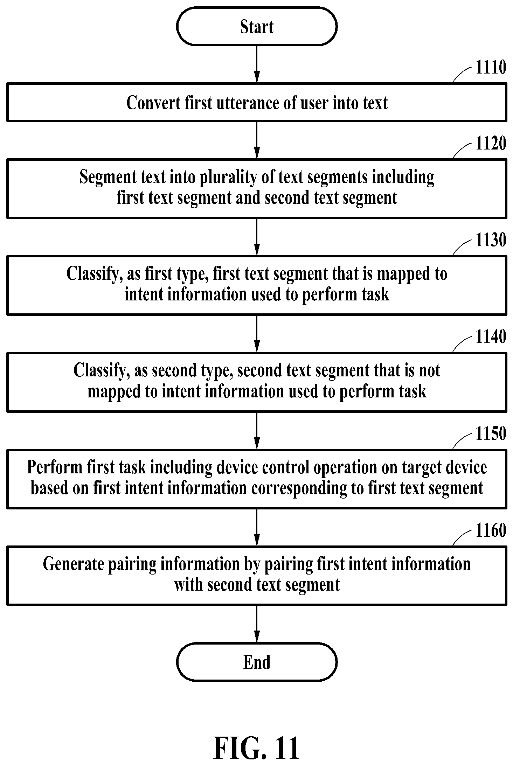

FIG. 11 is a flowchart illustrating an operation method of an electronic device according to an embodiment.

Operations 1110 to 1160 may be performed sequentially but not necessarily. For example, the order of each of operations 1110 to 1160 may be changed, and at least two operations may be performed in parallel.

According to an embodiment, operations 1110 to 1160 may be understood as being performed by a processor (e.g., the processor 520 of FIG. 6) of an electronic device (e.g., the electronic device 501 of FIG. 6).

In operation 1110, an electronic device (e.g., the electronic device 501 of FIG. 5) according to an embodiment may convert an utterance of a user into text.

In operation 1120, the electronic device according to an embodiment may segment the text into a plurality of text segments including a first text segment and a second text segment.

In operation 1130, the electronic device according to an embodiment may classify, as a first type, the first text segment that is mapped to intent information used to perform a task.

In operation 1140, the electronic device according to an embodiment may classify, as a second type, the second text segment that is not mapped to intent information used to perform a task. Operations 1130 and 1140 are not limited to a sequential order and may be performed in parallel.

In operation 1150, the electronic device according to an embodiment may perform a first task including a device control operation on a target device based on first intent information corresponding to the first text segment.

In operation 1160, the electronic device according to an embodiment may generate pairing information by pairing the first intent information with the second text segment. The pairing information may be used to perform the first task when text corresponding to the second text segment is identified in a second utterance of the user.

According to an embodiment, a method may include converting a first utterance of a user into text. The method may include segmenting the text into a plurality of text segments including a first text segment and a second text segment. The method may include classifying, as a first type, the first text segment that is mapped to intent information used to perform a task. The method may include classifying, as a second type, the second text segment that is not mapped to intent information used to perform a task. The method may include performing a first task including a device control operation on a target device based on first intent information corresponding to the first text segment. The method may include generating pairing information by pairing the first intent information with the second text segment. The pairing information may be used to perform the first task when text corresponding to the second text segment is identified in a second utterance of the user.

According to an embodiment, the method may further include determining the pairing information as an utterance chain when the number of pairings between the first intent information and the second text segment exceeds a threshold.

According to an embodiment, the utterance chain may be used to perform the first task based on the first intent information included in the utterance chain when the text corresponding to the second text segment is identified in the second utterance of the user.

According to an embodiment, the method may further include adaptively updating intent information included in the utterance chain based on a third utterance of the user. The third utterance may include an utterance in which the text corresponding to the second text segment and intent information different from the first intent information are identified. The third utterance may include a modification request for the first intent information.

According to an embodiment, the first intent information may include a plurality of pieces of intent information. The first task may include a plurality of tasks corresponding to the plurality of pieces of intent information.

According to an embodiment, the second text segment may include text indicating a situation of the user.

According to an embodiment, identification of the text corresponding to the second text segment in the second utterance may be performed based on determining a similarity between the second text segment and a second-type text segment identified in the second utterance.

According to an embodiment, a method may include converting an utterance of a user into text. The method may include segmenting the text into text segments including at least one of a first text segment and a second text segment. The method may include classifying, as a first type, the first text segment that is mapped to intent information used to perform a task. The method may include classifying, as a second type, the second text segment that is not mapped to intent information used to perform a task. The method may include identifying an utterance chain corresponding to the second text segment. The method may include performing a first task including a device control operation on a target device based on first intent information included in the utterance chain. The utterance chain may be a pairing of the first intent information identified in an utterance prior to the utterance and a second-type text segment obtained in the utterance prior to the utterance.

According to an embodiment, identification of the utterance chain may be performed based on determining a similarity between the second text segment and a second-type text segment included in the utterance chain.

According to an embodiment, the method may further include adaptively updating intent information included in the utterance chain based on an utterance subsequent to the utterance of the user.

According to an embodiment, the subsequent utterance may include an utterance in which the text corresponding to the second-type text segment and intent information different from the first intent information are identified. The subsequent utterance may include a modification request for the first intent information.

According to an embodiment, the first intent information may include a plurality of pieces of intent information. The first task may include a plurality of tasks corresponding to the plurality of pieces of intent information.

According to an embodiment, the second text segment may include text indicating a situation of the user.

According to an embodiment, an electronic device (e.g., the electronic device 101 of FIG. 1, the electronic device 201 of FIG. 2, or the electronic device 501 of FIG. 5) may include a processor (e.g., the processor 120 of FIG. 1, the processor 203 of FIG. 2, or the processor 520 of FIG. 5) and memory (e.g., the memory 130 of FIG. 1, the memory 207 of FIG. 2, or the memory 530 of FIG. 5) storing instructions. The instructions, when executed individually or collectively by the processor, may cause the electronic device to convert a first utterance of a user into text. The instructions, when executed individually or collectively by the processor, may cause the electronic device to segment the text into a plurality of text segments including a first text segment and a second text segment. The instructions, when executed individually or collectively by the processor, may cause the electronic device to classify, as a first type, the first text segment that is mapped to intent information used to perform a task. The instructions, when executed individually or collectively by the processor, may cause the electronic device to classify, as a second type, the second text segment that is not mapped to intent information used to perform a task. The instructions, when executed individually or collectively by the processor, may cause the electronic device to perform a first task including a device control operation on a target device based on first intent information corresponding to the first text segment. The instructions, when executed individually or collectively by the processor, may cause the electronic device to generate pairing information by pairing the first intent information with the second text segment. The pairing information may be used to perform the first task when text corresponding to the second text segment is identified in a second utterance of the user.

According to an embodiment, the instructions, when executed individually or collectively by the processor, may cause the electronic device to determine the pairing information as an utterance chain when the number of pairings between the first intent information and the second text segment exceeds a threshold.

According to an embodiment, the utterance chain may be used to perform the first task based on the first intent information included in the utterance chain when the text corresponding to the second text segment is identified in the second utterance of the user.

According to an embodiment, the instructions, when executed individually or collectively by the processor (120; 203; 520), cause the electronic device (101; 201; 501) to adaptively update intent information included in the utterance chain based on a third utterance of the user. The third utterance may include an utterance in which the text corresponding to the second text segment and intent information different from the first intent information are identified. The third utterance may include a modification request for the first intent information.

According to an embodiment, the first intent information may include a plurality of pieces of intent information. The task may include a plurality of tasks corresponding to the plurality of pieces of intent information.

According to an embodiment, the second text segment may include text indicating a situation of the user.

According to an embodiment, identification of the text corresponding to the second text segment in the second utterance may be performed based on determining a similarity between the second text segment and a second-type text segment identified in the second utterance.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, the module may be implemented in the form of an application-specific integrated circuit (ASIC).

Various embodiments as set forth herein may be implemented as software (e.g., program) including one or more instructions that are stored in a storage medium (e.g., internal memory or external memory) that is readable by a machine (e.g., electronic device). For example, a processor (e.g., processor) of the machine (e.g., electronic device) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, the method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

### Explanation of reference numerals

501: Electronic device
601: Intelligent server

## Claims

1. A method comprising:
converting a first utterance of a user into text;
segmenting the text into a plurality of text segments comprising a first text segment and a second text segment;
classifying, as a first type, the first text segment that is mapped to intent information used to perform a task;
classifying, as a second type, the second text segment that is not mapped to intent information used to perform a task;
performing a first task including a device control operation on a target device based on first intent information corresponding to the first text segment; and
generating pairing information by pairing the first intent information with the second text segment,
wherein the pairing information is used to perform the first task when text corresponding to the second text segment is identified in a second utterance of the user.

2. The method of claim 1, further comprising:
determining the pairing information as an utterance chain when a number of pairings between the first intent information and the second text segment exceeds a threshold.

3. The method of any one of claims 1 and 2, wherein the utterance chain is used to perform the first task based on the first intent information included in the utterance chain when the text corresponding to the second text segment is identified in the second utterance of the user.

4. The method of any one of claims 1 to 3, further comprising:
adaptively updating intent information included in the utterance chain based on a third utterance of the user,
wherein the third utterance comprises:
an utterance in which the text corresponding to the second text segment and intent information different from the first intent information are identified; or
a modification request for the first intent information.

5. The method of any one of claims 1 to 4, wherein
the first intent information comprises a plurality of pieces of intent information, and
the first task comprises a plurality of tasks corresponding to the plurality of pieces of intent information.

6. The method of any one of claims 1 to 5, wherein the second text segment comprises text indicating a situation of the user.

7. The method of any one of claims 1 to 6, wherein
identification of the text corresponding to the second text segment in the second utterance is performed based on determining a similarity between the second text segment and a second-type text segment identified in the second utterance.

8. An electronic device (101; 201; 501) comprising:
a processor (120; 203; 520); and
memory (130; 207; 530) storing instructions,
wherein the instructions, when executed individually or collectively by the processor (120; 203; 520), cause the electronic device (101; 201; 501) to:
convert a first utterance of a user into text;
segment the text into a plurality of text segments comprising a first text segment and a second text segment;
classify, as a first type, the first text segment that is mapped to intent information used to perform a task;
classify, as a second type, the second text segment that is not mapped to intent information used to perform a task;
perform a first task including a device control operation on a target device based on first intent information corresponding to the first text segment; and
generate pairing information by pairing the first intent information with the second text segment,
wherein the pairing information is used to perform the first task when text corresponding to the second text segment is identified in a second utterance of the user.

9. The electronic device (101; 201; 501) of claim 8, wherein the instructions, when executed individually or collectively by the processor (120; 203; 520), cause the electronic device (101; 201; 501) to determine the pairing information as an utterance chain when a number of pairings between the first intent information and the second text segment exceeds a threshold.

10. The electronic device (101; 201; 501) of any one of claims 8 and 9, wherein the utterance chain is used to perform the first task based on the first intent information included in the utterance chain when the text corresponding to the second text segment is identified in the second utterance of the user.

11. The electronic device (101; 201; 501) of any one of claims 8 to 10, wherein the instructions, when executed individually or collectively by the processor (120; 203; 520), cause the electronic device (101; 201; 501) to:
adaptively update intent information included in the utterance chain based on a third utterance of the user,
wherein the third utterance comprises:
an utterance in which the text corresponding to the second text segment and intent information different from the first intent information are identified; or
a modification request for the first intent information.

12. The electronic device (101; 201; 501) of any one of claims 8 to 11, wherein
the first intent information comprises a plurality of pieces of intent information, and
the first task comprises a plurality of tasks corresponding to the plurality of pieces of intent information.

13. The electronic device (101; 201; 501) of any one of claims 8 to 12, wherein the second text segment comprises text indicating a situation of the user.

14. The electronic device (101; 201; 501) of any one of claims 8 to 13, wherein
identification of the text corresponding to the second text segment in the second utterance is performed based on determining a similarity between the second text segment and a second-type text segment identified in the second utterance.
